# EUROPÄISCHE PATENTSCHRIFT

(11) **EP 3 794 393 B1**
(45) Veröffentlichungstag und Bekanntmachung des Hinweises auf die Patenterteilung: **27.09.2023**
(21) Anmeldenummer: 18726378.5
(22) Anmeldetag: 14.05.2018
(51) Int. Cl.: H01S 3/00, G02B 7/182, G02B 17/06

(54) **FOKUSSIEREINRICHTUNG UND EUV-STRAHLUNGSERZEUGUNGSVORRICHTUNG DAMIT**
FOCUSING DEVICE AND EUV RADIATION GENERATING DEVICE HAVING SAME
SYSTÈME DE FOCALISATION ET DISPOSITIF DE PRODUCTION DE RAYONNEMENT EUV

(43) Veröffentlichungstag der Anmeldung: 24.03.2021
(73) Patentinhaber: TRUMPF Lasersystems for Semiconductor Manufacturing GmbH, 71254 Ditzingen (DE)
(72) Erfinder: LAMBERT, Martin, 71404 Korb (DE); ERGIN, Tolga, 74321 Bietigheim-Bissingen (DE)
(74) Vertreter: Kohler Schmid Möbus Patentanwälte
(86) Internationale Anmeldenummer: PCT/EP2018/062317
(87) Internationale Veröffentlichungsnummer: WO 2019/219159

(56) Entgegenhaltungen:
- WO-A1-2015/036025
- US-A- 3 950 079
- US-A- 5 144 476

## Beschreibung

Die vorliegende Erfindung betrifft eine Fokussiereinrichtung zur Fokussierung eines Laserstrahls in einem Zielbereich, insbesondere für die Erzeugung von EUV-Strahlung, umfassend: einen Paraboloid-Spiegel zur Aufweitung des Laserstrahls, sowie einen Ellipsoid- oder Hyperboloid-Spiegel zur Fokussierung des aufgeweiteten Laserstrahls an einer Fokusposition innerhalb des Zielbereichs. Die Erfindung betrifft auch eine EUV-Strahlungserzeugungsvorrichtung mit einer solchen Fokussiereinrichtung.

Eine EUV-Strahlungserzeugungsvorrichtung mit einer Strahlführungseinrichtung, welche eine derartige Fokussiereinrichtung aufweist, um zwei Laserstrahlen in einem Zielbereich zu fokussieren, ist aus der WO 2015/036024 A1 bekannt geworden. In den Zielbereich, der in einer Vakuum-Kammer gebildet ist, kann ein Target-Material zur Erzeugung von EUV-Strahlung eingebracht werden. Bei dem Target-Material kann es sich beispielsweise um Zinn-Tröpfchen handeln, auf die der Laserstrahl auftrifft, um die EUV-Strahlung zu erzeugen. Die weiter oben beschriebene Fokussiereinrichtung kann auch in anderen optischen Einrichtungen eingesetzt werden, beispielsweise in einer Laserbearbeitungsmaschine, insbesondere in einer Laserschneid- oder in einer Laserschweißmaschine.

Aus der WO 2016/116147 A1 ist eine Strahlführungseinrichtung bekannt geworden, die vier Spiegel mit gekrümmten reflektierenden Oberflächen sowie eine Bewegungseinrichtung aufweist, die ausgebildet ist, die zweite und die dritte reflektierende Oberfläche gemeinsam relativ zur ersten und zur vierten reflektierenden Oberfläche zu bewegen. Der zweite und der dritte Spiegel können in einem festen Abstand zueinander an einem gemeinsamen Träger angebracht sein und die Bewegungseinrichtung kann ausgebildet sein, zur gemeinsamen Bewegung des zweiten und des dritten Spiegels relativ zum ersten und vierten Spiegel den gemeinsamen Träger zu bewegen.

Eine Strahlführungseinrichtung für eine EUV-Strahlungserzeugungsvorrichtung, die eine Fokussiereinrichtung aufweist, wie sie oben beschrieben ist, ist auch aus der WO 2015/036025 A1 bekannt geworden. Dort wird ein Paraboloid-Spiegel zur Überlagerung von zwei Laserstrahlen genutzt, die auf einen ersten und auf einen zweiten, den ersten ringförmig umgebenden Flächenbereich des Paraboloid-Spiegels auftreffen. Zur Veränderung der Fokuspositionen innerhalb des Zielbereichs wird ein motorisch angetriebener, planer Umlenkspiegel verwendet, der im Strahlengang nach dem Fokussierspiegel der Fokussiereinrichtung angeordnet ist.

US 3 950 079 A beschreibt eine katoptische Anordnung zur Steuerung eines Laserstrahls durch das Bewegen eines oder mehrerer gekrümmter Spiegel relativ zu zwei im Wesentlichen orthogonalen Rotationsachsen. Alle Spiegel können um eine der beiden Rotationsachsen, die mit der Strahlachse des Laserstrahls übereinstimmt, gedreht werden, um die Strahlachse des Laserstrahls auf unterschiedliche Punkte auf einem ersten Fokalkreis auszurichten. Alle Spiegel mit Ausnahme desjenigen Spiegels, auf den der Laserstrahl auftrifft, sind um die zweite Rotationsachse drehbar, um den Laserstrahl auf unterschiedliche Punkte eines zweiten Fokalkreises auszurichten, der im Wesentlichen senkrecht zum ersten Fokalkreis ausgerichtet ist.

Bei der Realisierung einer Fokusbewegung mit Hilfe von mindestens einem Umlenkspiegel wird zusätzlich zu dem aufweitenden Spiegel und dem fokussierenden Spiegel mindestens ein zusätzliches optisches Element im Strahlengang sowie ein zusätzlicher Aktuator benötigt. Bei Anwendungen, bei denen das Vorsehen jedes (weiteren) reflektierenden optischen Elements zu signifikanten Leistungsverlusten führt und/oder bei denen der Bauraum sehr limitiert ist, ist die Einstellung der Fokusposition mittels eines aktuierbaren Umlenkspiegels ungünstig oder ggf. nicht möglich.

### Aufgabe der Erfindung

Es ist die Aufgabe der vorliegenden Erfindung, eine Fokussiereinrichtung sowie eine EUV-Strahlungserzeugungsvorrichtung mit einer solchen Fokussiereinrichtung bereitzustellen, bei denen die Fokusposition möglichst frei im Raum positioniert werden kann, ohne den Bauraum signifikant zu vergrößern und ohne weitere optische Elemente hinzuzufügen.

### Gegenstand der Erfindung

Diese Aufgabe wird erfindungsgemäß gelöst durch eine Fokussiereinrichtung der eingangs genannten Art, wobei der Paraboloid-Spiegel und der Ellipsoid- oder Hyperboloid-Spiegel in einem festen Abstand zueinander angebracht sind, und die Bewegungseinrichtung zur Verschiebung des Ellipsoid- oderHyperboloid-Spiegels gemeinsam mit dem Paraboloid-Spiegel in mindestens einer Raumrichtung (X), bevorzugt in zwei oder in drei Raumrichtungen (X, Y, Z), ausgebildet ist.

Erfindungsgemäß sind der Paraboloid-Spiegel und der Ellipsoid- oder Hyperboloid-Spiegel in einem festen Abstand zueinander angeordnet und bevorzugt an einem gemeinsamen Träger angebracht. In diesem Fall sind die beiden Spiegel typischerweise derart bzw. in einem solchen Abstand angeordnet, dass die Fokusposition des Paraboloid-Spiegels und eine der beiden Fokuspositionen des Ellipsoid- oder Hyperboloid-Spiegels übereinstimmen. Auf diese Weise wird der in der Regel parallel zur Symmetrieachse des Paraboloid-Spiegels einfallende, in der Regel kollimierte Laserstrahl ohne Abbildungsfehler auf die zweite Fokusposition des Ellipsoid-Spiegels abgebildet bzw. fokussiert, die sich in diesem Fall innerhalb des Zielbereichs befindet. Es versteht sich, dass im Sinne dieser Anmeldung unter einem Paraboloid-Spiegel, einem Ellipsoid-Spiegel und einem Hyperboloid-Spiegel wie allgemein üblich reflektierende Spiegelflächen verstanden werden, die lediglich einen Teilbereich eines Paraboloids, eines Ellipsoids oder eines Hyperboloids bilden. Unter einem aufweitenden Paraboloid-Spiegel wird nicht zwingend ein Paraboloid-Spiegel mit einer konvex gekrümmten reflektierenden Oberfläche verstanden: Für die Strahlaufweitung kann auch ein Paraboloid-Spiegel mit einer konkav gekrümmten reflektierenden Oberfläche verwendet werden; in diesem Fall bildet die Fokusposition des Paraboloid-Spiegels einen Zwischenfokus und der Laserstrahl wird nach dem Zwischenfokus aufgeweitet. Bei hohen Leistungen sollten Zwischenfoki aufgrund der Gefahr eines Gasdurchbruchs jedoch vermieden werden.

Erfindungsgemäß ist die Bewegungseinrichtung zur gemeinsamen Verschiebung des Paraboloid-Spiegels und des Ellipsoid- oder Hyperboloid-Spiegels, bevorzugt zur gemeinsamen Bewegung des Trägers, in mindestens einer Raumrichtung, bevorzugt in zwei oder in drei Raumrichtungen, ausgebildet. In diesem Fall wird die Fokussiereinrichtung typischerweise kartesisch (ohne Rotation) frei im Raum bewegt, um die Fokusposition ebenso frei im Raum zu bewegen. Wenn die Position des in die Fokussiereinrichtung einfallenden Laserstrahls ortsfest bleibt, verändert sich bei der Bewegung der Fokussiereinrichtung in eine Richtung, die nicht parallel zur Einfallsrichtung des Laserstrahls verläuft, die Position, an welcher der Laserstrahl auf den Paraboloid-Spiegel auftrifft. Entsprechend variiert auch die Position des aufgeweiteten Laserstrahls auf dem Ellipsoid- oder Hyperboloid-Spiegel, so dass die Spiegelflächen abhängig von der Größe des Bereichs, in dem die Fokusposition variiert werden soll, eine entsprechend große Oberfläche aufweisen müssen. Für die Bewegung der Spiegel im Raum sind diese typischerweise auf einem gemeinsamen (Spiegel-)Träger angeordnet, der mit Hilfe von einer, zwei oder drei Linearachsen bzw. mittels geeigneter Aktoren, beispielsweise in Form von Linearmotoren, frei im Raum verschoben werden kann.

Bei einer Weiterbildung sind der Ellipsoid- oder Hyperboloid-Spiegel und der Paraboloid-Spiegel auf einem gemeinsamen verschiebbaren Träger angebracht. Die Bewegungseinrichtung kann zu diesem Zweck auf den gemeinsamen Träger einwirken, um diesen genau einer Raumrichtung zu verschieben.

Bei einer Weiterbildung ist die Bewegungseinrichtung ausgebildet, den Träger entlang einer Symmetrieachse des Paraboloid-Spiegels zu verschieben. Durch die Verschiebung des Trägers entlang der Symmetrieachse des Paraboloid-Spiegels verändert sich bei der Verschiebung die Position eines Laserstrahls, der parallel zur Symmetrieachse auf den Paraboloid-Spiegel auftrifft, nicht. Daher ist es nicht erforderlich, den Paraboloid-Spiegel, genauer gesagt dessen Spiegelfläche, für die Bewegung der Fokusposition des Laserstrahls im Raum größer als unbedingt erforderlich zu dimensionieren. Die Bewegungseinrichtung kann zur Verschiebung des Trägers entlang der Symmetrieachse beispielsweise einen Linearantrieb bzw. ein aerostatisches Lager aufweisen.

Die Erfindung betrifft auch eine EUV-Strahlungserzeugungsvorrichtung, umfassend: eine Vakuum-Kammer, in die zur Erzeugung von EUV-Strahlung ein Target-Material in einen Zielbereich einbringbar ist, eine Strahlquelle zur Erzeugung eines Laserstrahls, eine Fokussiereinrichtung, die wie weiter oben beschrieben ausgebildet ist, zur Fokussierung des Laserstrahls in dem Zielbereich zur Erzeugung von EUV-Strahlung, sowie eine Strahlführungseinrichtung zur Führung des Laserstrahls von der Strahlquelle zu der Fokussiereinrichtung. Die Strahlquelle kann zur Erzeugung eines Laserstrahls mit sehr hoher Leistung (> 10 kW) ausgebildet sein. Die Strahlquelle kann zur Erzeugung eines Laserstrahls mit einer Wellenlänge im Bereich von ca. 10 µm ausgebildet sein, beispielsweise als CO₂-Laser. Die Strahlquelle kann auch zur Erzeugung eines Laserstrahls mit einer Wellenlänge im Bereich von ca. 1 µm ausgebildet sein, beispielsweise als Festkörperlaser. Das in die Vakuum-Kammer eingebrachte Target-Material wird von dem fokussierten Laserstrahl getroffen und hierbei in einen Plasma-Zustand überführt, der zur Erzeugung von EUV-Strahlung dient. Das Target-Material, bei dem es sich beispielsweise um Zinn-Tröpfchen handeln kann, wird dem Zielbereich mit Hilfe einer Bereitstellungseinrichtung zugeführt, welche das Target-Material entlang eines vorgegebenen Pfades führt, der den Zielbereich kreuzt. Mit Hilfe der weiter oben beschriebenen Fokussiereinrichtung kann die Fokusposition dynamisch verändert werden und der Laserstrahl während der Erzeugung der EUV-Strahlung an einem praktisch beliebigen Ort innerhalb des Zielbereichs positioniert werden. Die EUV-Strahlungserzeugungseinrichtung kann auch eine Steuer- und/oder Regeleinrichtung zur Steuerung bzw. zur Regelung der Fokusposition in dem Zielbereich aufweisen.

Bei einer Ausführungsform ist die Strahlführungseinrichtung zur Führung des insbesondere kollimierten Laserstrahls zu dem Paraboloid-Spiegel parallel zu einer Symmetrieachse des Paraboloid-Spiegels ausgebildet. Für den Fall, dass der (kollimierte) Laserstrahl parallel zur Symmetrieachse auf den Paraboloid-Spiegel auftrifft, wird der Laserstrahl praktisch ohne Aberrationen auf die Fokusposition des Paraboloid-Spiegels abgebildet bzw. fokussiert.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer EUV-Strahlerzeugungsvorrichtung, welche eine Fokussiereinrichtung mit einem Paraboloid-Spiegel zur Aufweitung und einem Ellipsoid-Spiegel zur Fokussierung eines Laserstrahls an einer Fokusposition aufweist, die in einem Zielbereich gebildet ist,
- Fig. 2a,b: schematische Darstellungen der Abbildungseigenschaften eines Paraboloid-Spiegels und eines Ellipsoid-Spiegels,
- Fig. 3a-c: schematische Darstellungen der Fokussiereinrichtung von Fig. 1, bei welcher der Paraboloid-Spiegel und der Ellipsoid-Spiegel in einem festen Abstand zueinander angeordnet sind und mittels einer Bewegungseinrichtung entlang von drei Raumrichtungen verschoben werden können,
- Fig. 4a-c: schematische nicht beanspruchte Darstellungen analog zu Fig. 3a-c, bei denen der Ellipsoid-Spiegel um eine erste Fokusposition gedreht und gemeinsam mit dem Paraboloid-Spiegel entlang der Symmetrieachse des Paraboloid-Spiegels verschoben wird,
- Fig. 5a,b: schematische nicht beanspruchte Darstellungen der Fokussiereinrichtung von Fig. 4b,c, bei welcher der Paraboloid-Spiegel ortsfest ist und der Ellipsoid-Spiegel entlang einer Verschieberichtung verschoben wird, sowie
- Fig. 6a-c: schematische nicht beanspruchte Darstellungen der Fokussiereinrichtung von Fig. 5a,b bei der Veränderung der Fokusposition durch die Bewegung des Ellipsoid-Spiegels mittels einer Bewegungseinrichtung in Form eines 6-Achsen-Aktuators.

In der folgenden Beschreibung der Zeichnungen werden für gleiche bzw. funktionsgleiche Bauteile identische Bezugszeichen verwendet.

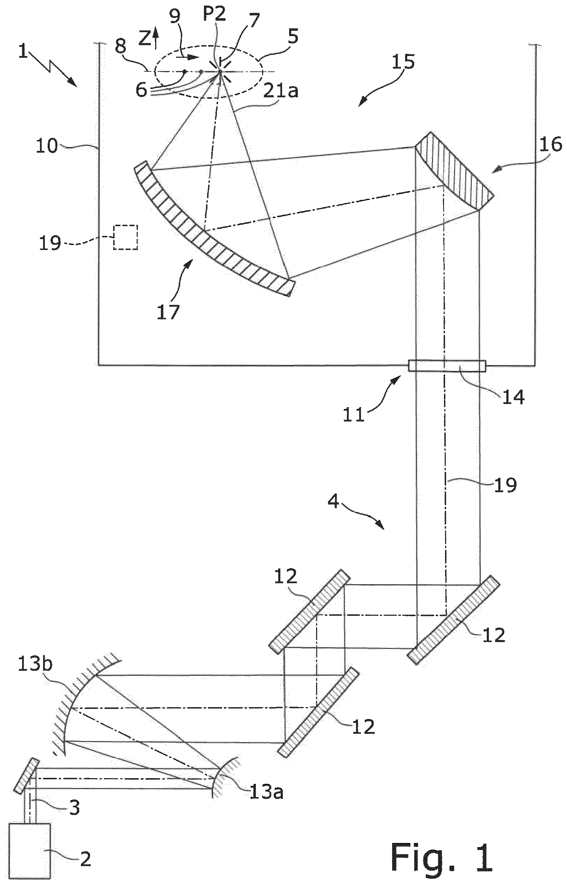

**Fig. 1** zeigt eine EUV-Strahlungserzeugungseinrichtung **1** mit einer Strahlquelle **2** in Form eines als CO₂-Laser ausgebildeten Treiberlasers, der einen gepulsten Laserstrahl **3** mit hoher Strahlungsleistung (>> 1 kW) erzeugt. Zur Erzeugung des Laserstrahls 3 mit hoher Strahlleistung kann die Strahlquelle 2 mehrere Verstärker umfassen. Der von dem CO₂-Laser erzeugte Laserstrahl 3 weist im gezeigten Beispiel eine Wellenlänge von ca. 10,6 µm auf. Die Verwendung einer Strahlquelle 2 zur Erzeugung eines (gepulsten) Laserstrahls mit einer anderen Wellenlänge, beispielsweise von ca. 1 µm (z.B. in Form eines Festkörperlasers), ist ebenfalls möglich.

Die EUV-Strahlungserzeugungseinrichtung 1 umfasst ferner eine Strahlführungseinrichtung **4** mittels derer der Laserstrahl 3 in Richtung auf einen Zielbereich **5** geführt wird, an dem ein Target-Material **6** in Form von Zinn-Tröpfchen eingebracht ist, um EUV-Strahlung **7** zu erzeugen. Auf die Darstellung von Messeinrichtungen zur Überwachung des Strahlengangs des Laserstrahls 3 wurde aus Gründen der Übersichtlichkeit verzichtet. Das Target-Material 6, d.h. die Zinn-Tröpfchen, werden mittels einer (nicht gezeigten) Bereitstellungseinrichtung erzeugt und diese bewegen sich entlang einer vorgegebenen Bewegungsbahn **8** bzw. eines vorgegebenen Pfades, welche einer im Wesentlichen horizontalen, geradlinigen Bewegungsbahn in der Art einer Wurfparabel entspricht, entlang einer horizontalen Bewegungsrichtung **9.** Es versteht sich, dass die Bewegungsrichtung 9 auch einer anderen Richtung, z.B. der Schwerkraftrichtung, entsprechen kann.

Das Target-Material 6 wird mittels des Laserstrahls 3 in einen Plasma-Zustand überführt, wobei die EUV-Strahlung 7 erzeugt wird. Zur gezielten Ausrichtung bzw. Bündelung der auf diese Weise erzeugten EUV-Strahlung 7 umfasst die EUV-Strahlungserzeugungsvorrichtung 1 einen (nicht gezeigten) EUV-Fokussierspiegel. Das Target-Material 6, der EUV-Fokussierspiegel und der Zielbereich 5, in dem das Target-Material 6 einbringbar ist, sind in einer Vakuum-Kammer **10** angeordnet, wohingegen die Strahlquelle 2 außerhalb der Vakuum-Kammer 10 angeordnet ist.

Um den Laserstrahl 3 in Richtung auf den Zielbereich 5 zu führen, wird der Laserstrahl 3 ausgehend von der Strahlquelle 2 über eine Öffnung **11** in die Vakuum-Kammer 10 geführt. Zur Führung des Laserstrahls 3 von der Strahlquelle 2 zu der Öffnung 11 weist die Strahlführungseinrichtung 4 eine Mehrzahl von Umlenkspiegeln **12** sowie ein Paar von Parabolspiegeln **13a,b** auf, wobei letztere zur Änderung des Strahlquerschnitts des Laserstrahls 3 dienen. Zusätzlich oder alternativ zur Verwendung von Parabolspiegeln 13a,b können auch Ellipsoid- oder Hyperboloid-Spiegel zur Änderung des Strahlquerschnitts des Laserstrahls 3 dienen.

Die Öffnung 11 in der Vakuum-Kammer 10 ist gasdicht durch ein plattenförmiges optisches Element **14** in Form eines Fensters verschlossen. In der Vakuum-Kammer 10 ist eine Fokussiereinrichtung **15** angeordnet, die einen Paraboloid-Spiegel **16** und einen Ellipsoid-Spiegel **17** umfasst. Der Paraboloid-Spiegel 16 dient zur Aufweitung des von der Strahlführungseinrichtung 4 kollimiert zugeführten Laserstrahls 3 und weist eine konvexe Krümmung auf. Der Ellipsoid-Spiegel 17 dient zur Fokussierung des aufgeweiteten Laserstrahls 3 an einer Fokusposition **P2** in dem Zielbereich 5, an der im gezeigten Beispiel ein Zinn-Tröpfchen des Target-Materials 6 eingebracht ist.

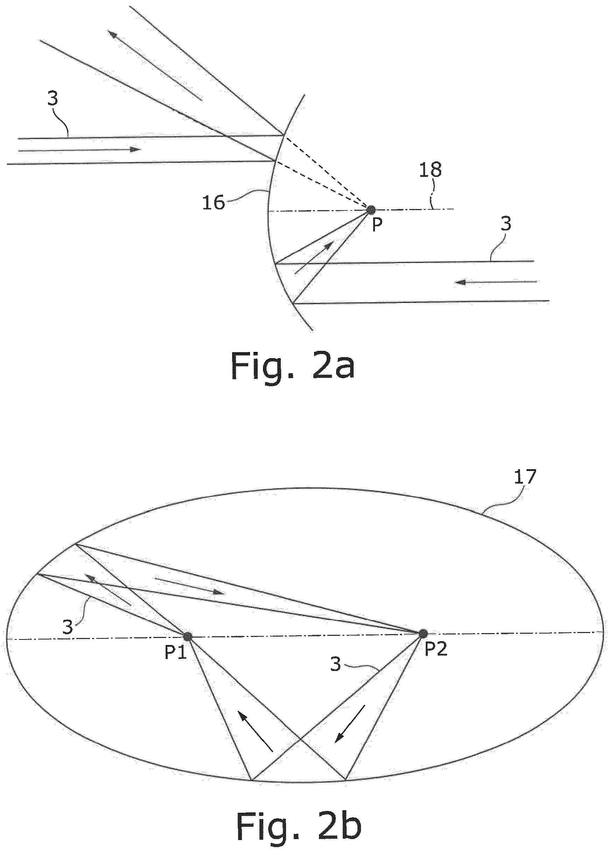

Nachfolgend werden anhand von **Fig. 2a**,b die Abbildungseigenschaften des Paraboloid-Spiegels 16 sowie des Ellipsoid-Spiegels 17 erklärt. Bei dem in Fig. 2a gezeigten Paraboloid-Spiegel 16 wird ein parallel zur Symmetrieachse **18** des Paraboloid-Spiegels 16 auftreffender kollimierter Laserstrahl 3 perfekt, d.h. aberrationsfrei, auf die Fokusposition **P** des Paraboloid-Spiegels 16 abgebildet bzw. fokussiert, und zwar unabhängig davon, ob der kollimierte Laserstrahl 3 auf die konkav oder auf die konvex gekrümmte Seite des Paraboloid-Spiegels 16 auftrifft, d.h. unabhängig davon, ob der Laserstrahl 3 reel oder virtuell abgebildet wird. Entsprechend wird bei dem Ellipsoid-Spiegel 17 von Fig. 2b ein von einer ersten Fokusposition **P1** ausgehender Laserstrahl 3 ohne Aberrationen auf eine zweite Fokusposition **P2** des Ellipsoid-Spiegels 17 abgebildet, und umgekehrt. Bei der in Fig. 2b gezeigten Darstellung ist der Ellipsoid-Spiegel 17 in Form eines vollständigen Ellipsoids bzw. einer vollständigen Ellipse dargestellt; es versteht sich aber, dass der Ellipsoid-Spiegel 17 wie in Fig. 1 gezeigt ausgebildet ist, d.h. lediglich einen Teilbereich des schalenförmigen Ellipsoids von Fig. 2b bildet.

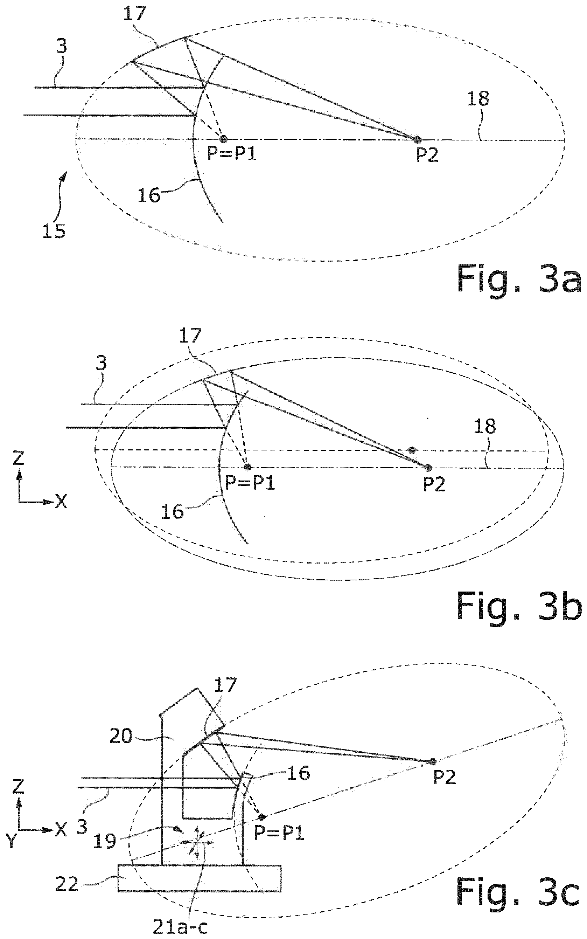

Wie in **Fig. 3a** zu erkennen ist, welche die Fokussiereinrichtung 15 von Fig. 1 im Detail zeigt, stimmt bei der Fokussiereinrichtung 15 die Fokusposition P des Paraboloid-Spiegels 16 mit der ersten Fokusposition P1 des Ellipsoid-Spiegels 17 überein und die zweite Fokusposition P2 des Ellipsoid-Spiegels 17 befindet sich innerhalb des Zielbereichs 5. Bei der in Fig. 3a gezeigten Ausrichtung des einfallenden kollimierten Laserstrahls 3 parallel zur Symmetrieachse 18 des Paraboloid-Spiegels 16 wird der Laserstrahl 3 aberrationsfrei auf die zweite Fokusposition P2 innerhalb des Zielbereichs 5 abgebildet.

Um die Fokusposition P2 innerhalb des Zielbereichs 5 zu variieren, weist die Fokussiereinrichtung 15 eine in Fig. 1 schematisch dargestellte Bewegungseinrichtung **19** auf, die ausgebildet ist, den Ellipsoid-Spiegel 17 relativ zum Paraboloid-Spiegel 16 (bzw. umgekehrt) und/oder gemeinsam mit dem Paraboloid-Spiegel 16 zu bewegen. Für die Realisierung der Bewegungseinrichtung 19 bestehen verschiedene Möglichkeiten, die nachfolgend im Einzelnen erläutert werden:
Bei der in **Fig. 3b**,c gezeigten Fokussiereinrichtung 15 sind der Paraboloid-Spiegel 16 und der Ellipsoid-Spiegel 17 in festem Abstand zueinander angeordnet und zu diesem Zweck auf einem gemeinsamen Träger **20** fixiert (vgl. Fig. 3c). Der Träger 20 ist mit Hilfe einer Bewegungseinrichtung 19, die drei Linearantriebe **21a-c** aufweist, die in Fig. 3c durch Doppelpfeile angedeutet sind, in drei Raumrichtungen verschiebbar. Der Träger 20 ist bei dem in Fig. 3c gezeigten Beispiel mittels einer aerostatischen Lagerung auf einer ortsfesten Unterlage **22** gelagert. Mit Hilfe der Bewegungseinrichtung 19 können der Paraboloid-Spiegel 16 und der Ellipsoid-Spiegel 17 gemeinsam, d.h. ohne eine Relativbewegung, in drei zueinander senkrechten Raumrichtungen verschoben werden. Die Fokusposition P2 innerhalb des Zielbereichs 5 verschiebt sich in diesem Fall entsprechend, ohne dass hierbei Aberrationen auftreten.

Wie anhand von Fig. 3b zu erkennen ist, verändert sich bei der Verschiebung des Ellipsoid-Spiegels 17 und des Paraboloid-Spiegels 16 die Position, an welcher der Laserstrahl 3 auf den Paraboloid-Spiegel 16 auftrifft, sofern die Verschiebung nicht parallel zur X-Richtung verläuft, die der Symmetrieachse 18 des Paraboloid-Spiegels 16 entspricht. Der Paraboloid-Spiegel 16 und auch der Ellipsoid-Spiegel 17 müssen daher in Abhängigkeit von der Größe des Bereichs, innerhalb dessen die Fokusposition P2 bewegt werden soll, eine ggf. erweiterte reflektierende Oberfläche aufweisen.

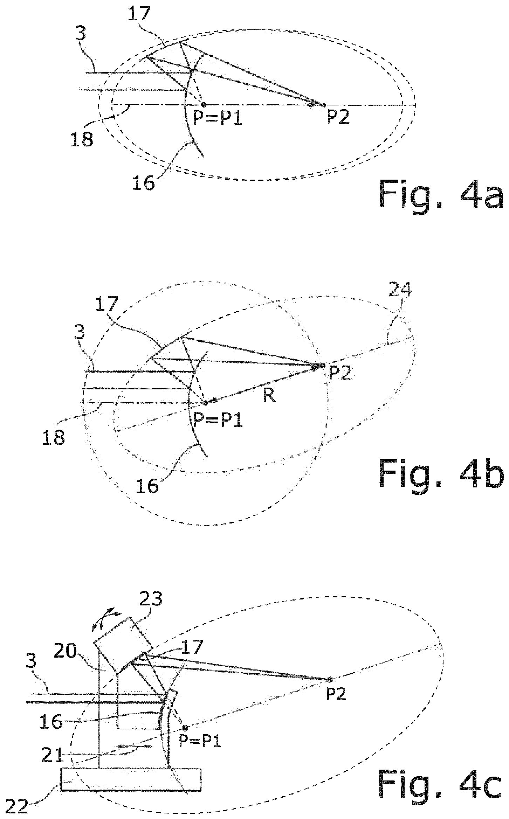

Bei der in **Fig. 4a****-c** gezeigten Fokussiereinrichtung 15 sind der Ellipsoid-Spiegel 17 und der Paraboloid-Spiegel 16 ebenfalls auf einem gemeinsamen, in Fig. 4c dargestellten Spiegel-Träger 20 angebracht. Der gemeinsame Träger 20 kann mit Hilfe eines durch einen Doppelpfeil angedeuteten Linearantriebs 21 der Bewegungseinrichtung 19 in Richtung des einfallenden Laserstrahls 3 bzw. in Richtung der Symmetrieachse 18 des Paraboloid-Spiegels 16 verschoben werden, wie dies in Fig. 4a gezeigt ist. Der Ellipsoid-Spiegel 17 ist mittels eines rotatorischen Aktors **23** der Bewegungseinrichtung 19 zusätzlich um seine erste Fokusposition P1 drehbar, wie dies in Fig. 4b und in Fig. 4c dargestellt ist.

Der Ellipsoid-Spiegel 17 ist für die Realisierung der Drehbewegung über den rotatorischen Aktor 23 an dem Träger 20 befestigt. Wie in Fig. 4b und in Fig. 4c zu erkennen ist, wird hierbei die (lange) Symmetrieachse **24** des Ellipsoid-Spiegels 17 um die erste Fokusposition P1 gedreht, wodurch sich die zweite Fokusposition P2 des Ellipsoid-Spiegels 17 entlang einer Kugelschale um die erste Fokusposition P1 dreht, wobei der Radius **R** der Drehbewegung dem Abstand zwischen der ersten Fokusposition P1 und der zweiten Fokusposition P2 des Ellipsoid-Spiegels 17 entspricht. Bei der Drehung des Ellipsoid-Spiegels 17 um die erste Fokusposition P1 bleibt die perfekte, aberrationsfreie Abbildung erhalten.

Bei der in Fig. 4a-c gezeigten nicht beanspruchten Fokussiereinrichtung 15 werden beide Spiegel 16, 17 mittels des Linearantriebs 21 der Bewegungseinrichtung 19 nur parallel zum einfallenden Laserstrahl 3 verschoben. Daher trifft der Laserstrahl 3 stets an derselben Stelle auf den Paraboloid-Spiegel 16 auf, so dass dieser in der Regel kleiner dimensioniert werden kann als dies bei der in Fig. 3a-c gezeigten Fokussiereinrichtung 15 der Fall ist.

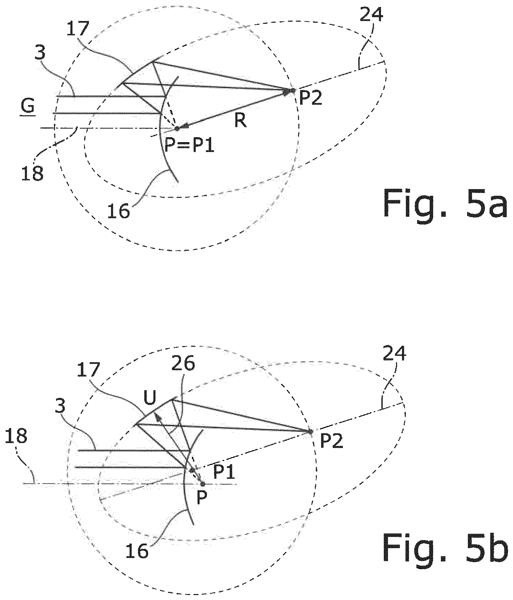

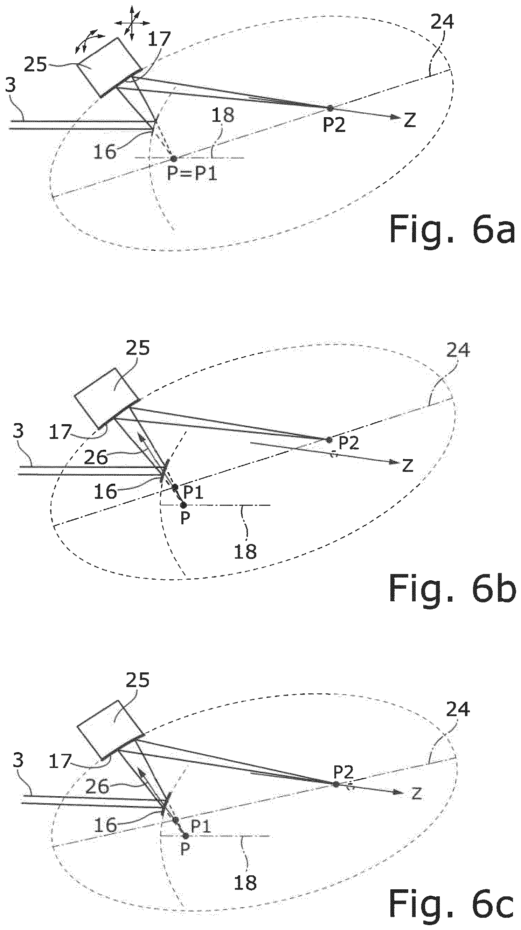

Bei der in **Fig. 5a**,b und in **Fig. 6a****-c** gezeigten nicht beanspruchten Fokussiereinrichtung 15 ist der Paraboloid-Spiegel 16 ortsfest angeordnet und die Bewegungseinrichtung 19 weist einen 6-Achs-Aktuator **25,** beispielsweise in Form eines Hexapods oder einer Stewart-Plattform auf, mittels dessen der Ellipsoid-Spiegel 17 in drei Raumrichtungen verschoben und zusätzlich im Raum gedreht werden kann. Die Drehung des Ellipsoid-Spiegels 17 erfolgt hierbei wie bei der in Fig. 4a-c dargestellten Fokussiereinrichtung 15 um dessen erste Fokusposition P1. Die Bewegungseinrichtung 19 weist zusätzlich zu dem 6-Achs-Aktuator 25 eine Steuerungseinrichtung beispielsweise in Form eines Mikroprozessors auf, um den 6-Achs-Aktuator 25 anzusteuern, den Ellipsoid-Spiegel 17 entlang einer Verschieberichtung **26** zu verschieben, die einer Strahlrichtung des an dem Paraboloid-Spiegels 16 reflektierten Laserstrahls 3 in einer in Fig. 5a gezeigten Grundstellung entspricht, in welcher die Fokusposition P des Paraboloid-Spiegels 16 mit der ersten Fokusposition P1 des Ellipsoid-Spiegels 17 übereinstimmt. Die Verschieberichtung 26 entspricht auch der Richtung des aufgeweiteten, reflektierten Laserstrahls 3 zwischen der ortsfesten Fokusposition P des Paraboloid-Spiegels 16 und einem Umkehrpunkt **U,** an dem der Laserstrahl 3 von dem Ellipsoid-Spiegel 17 in Richtung auf die zweite Fokusposition P2 fokussiert wird.

Anhand von Fig. 6a-c wird erläutert, wie die Fokusposition P2 der Fokussiereinrichtung 15 mittels der in Fig. 5a,b gezeigten Bewegungseinrichtung 19 mit dem 6-Achsen-Aktuator 25 entlang der (willkürlich gewählten) Z-Richtung verschoben werden kann. Bei dem in Fig. 6a-c gezeigten Beispiel wird zunächst der Ellipsoid-Spiegel 17 um seine erste Fokusposition P1 gedreht, wie dies in Fig. 6a zu erkennen ist. Nachfolgend wird der Ellipsoid-Spiegel 17 entlang der Verschieberichtung 26 um eine vorgegebene Strecke verschoben, wodurch die zweite Fokusposition P2 um einen vom Verhältnis der Brennweiten des Ellipsoid-Spiegels 17 abhängigen Betrag verschoben wird, wie dies ebenfalls in Fig. 6b zu erkennen ist. Wie in Fig. 6c gezeigt ist, wird der Ellipsoid-Spiegel 17 nachfolgend erneut um seine (neue) erste Fokusposition P1 gedreht, bis die zweite Fokusposition P2 wieder auf der (willkürlich gewählten) Z-Richtung liegt. Auf diese Weise kann der Laserstrahl 3 entlang einer in einer beliebigen Richtung verlaufenden Linie innerhalb des Zielbereichs 5 versetzt werden.

Zusammenfassend kann durch die Bewegung des Ellipsoid-Spiegels 17 und des Paraboloid-Spiegel 16 die Fokusposition P2 innerhalb des Zielbereichs 5 verändert werden, ohne dass zu diesem Zweck zusätzliche optische Elemente wie aktuierbare Umlenkspiegel oder dergleichen benötigt werden. Alternativ zu dem weiter oben beschriebenen Fokussierspiegel in Form eines Ellipsoid-Spiegels 17 wird erfindungsgemäß ein Hyperboloid-Spiegel verwendet : Der Hyperboloid-Spiegel weist ebenfalls zwei Fokuspositionen auf und bildet einen von einer Fokusposition ausgehenden Laserstrahl aberrationsfrei auf die andere Fokusposition ab.

## Patentansprüche

1. Fokussiereinrichtung (15) ausgebildet zur Fokussierung eines Laserstrahls (3) in einem Zielbereich (5), insbesondere für die Erzeugung von EUV-Strahlung (7), umfassend:
einen Paraboloid-Spiegel (16) ausgebildet zur Aufweitung des Laserstrahls (3), sowie
einen Ellipsoid- oder Hyperboloid-Spiegel (17) ausgebildet zur Fokussierung des
aufgeweiteten Laserstrahls (3) an einer Fokusposition (P2) innerhalb des Zielbereichs (5),
eine Bewegungseinrichtung (19), die ausgebildet ist, zur Veränderung der Fokusposition (P2) innerhalb des Zielbereichs (5) den Ellipsoid- oder
Hyperboloid-Spiegel (17) gemeinsam mit dem Paraboloid-Spiegel (16) zu bewegen,
**dadurch gekennzeichnet,**
**dass** der Paraboloid-Spiegel (16) und der Ellipsoid- oder Hyperboloid-Spiegel (17) in einem festen Abstand zueinander angebracht sind, und
**dass** die Bewegungseinrichtung (19) zur Verschiebung des Ellipsoid- oder Hyperboloid-Spiegels (17) gemeinsam mit dem Paraboloid-Spiegel (16) in mindestens einer Raumrichtung (X), bevorzugt in zwei oder in drei Raumrichtungen (X, Y, Z), ausgebildet ist.

2. Fokussiereinrichtung nach Anspruch 1, bei welcher der Paraboloid-Spiegel (16) und der Ellipsoid- oder Hyperboloid-Spiegel (17) an einem gemeinsamen Träger (20) angebracht sind.

3. Fokussiereinrichtung nach Anspruch 2, bei welcher die Bewegungseinrichtung (19) zur Verschiebung des Trägers (20) in mindestens einer Raumrichtung (X), bevorzugt in zwei oder in drei Raumrichtungen (X, Y, Z), ausgebildet ist.

4. EUV-Strahlungserzeugungsvorrichtung (1), umfassend:
eine Vakuum-Kammer (10), in die zur Erzeugung von EUV-Strahlung (7) ein Target-Material (6) in einen Zielbereich (5) einbringbar ist, eine Strahlquelle (2) ausgebildet zur Erzeugung eines Laserstrahls (3),
eine Fokussiereinrichtung (15) nach einem der vorhergehenden Ansprüche ausgebildet zur Fokussierung des Laserstrahls (3) in dem Zielbereich (5) ausgebildet zur Erzeugung von EUV-Strahlung (7), sowie
eine Strahlführungseinrichtung (4) zur Führung des Laserstrahls (3) zu der Fokussiereinrichtung (15).

5. EUV-Strahlungserzeugungsvorrichtung nach Anspruch 4, bei welcher die Strahlführungseinrichtung (4) zur Führung des insbesondere kollimierten Laserstrahls (3) zu dem Paraboloid-Spiegel (16) parallel zu einer Symmetrieachse (18) des Paraboloid-Spiegels (16) ausgebildet ist.

## Claims

1. A focusing device (15) configured for focusing a laser beam (3) in a target area (5) in particular for the generation of EUV radiation (7), comprising:
a paraboloid mirror (16) configured for widening the laser beam (3), and an ellipsoid or hyperboloid mirror (17) configured for focusing the widened laser beam (3) at a focal position (P2) within the target area (5),
a movement device (19), which is configured to move the ellipsoid or hyperboloid mirror (17) together with the paraboloid mirror (16) in order to change the focal position (P2) within the target area (5),
**characterized**
**in that** the paraboloid mirror (16) and the ellipsoid or hyperboloid mirror (17) are arranged at a fixed distance from each other, and
**in that** the movement device (19) is designed to displace the ellipsoid or hyperboloid mirror (17) together with the paraboloid mirror (16) in at least one spatial direction (X), preferably in two or in three spatial directions (X, Y, Z).

2. The focusing device as claimed in claim 1, in which the paraboloid mirror (16) and the ellipsoid or hyperboloid mirror (17) are arranged on a common carrier (20).

3. The focusing device as claimed in claim 2, in which the movement device (19) is designed to displace the carrier (20) in at least one spatial direction (X), preferably in two or in three spatial directions (X, Y, Z).

4. An EUV radiation generating apparatus (1) comprising:
a vacuum chamber (10), into which a target material (6) can be introduced into a target area (5) to generate EUV radiation (7),
a beam source (2) configured for generating a laser beam (3),
a focusing device (15) as claimed in one of the preceding claims configured for focusing the laser beam (3) in the target area (5) to generate EUV radiation (7), and
a beam guiding device (4) for guiding the laser beam (3) to the focusing device (15).

5. The EUV radiation generating apparatus as claimed in claim 4, in which the beam guiding device (4) is designed to guide the in particular collimated laser beam (3) to the paraboloid mirror (16) parallel to an axis of symmetry (18) of the paraboloid mirror (16).

## Revendications

1. Dispositif de focalisation (15) conçu pour focaliser un faisceau laser (3) dans une zone cible (5), en particulier afin de générer un rayonnement UVE (7), comprenant :
un miroir parabolique (16) conçu pour élargir le faisceau laser (3), ainsi que un miroir elliptique ou hyperbolique (17) conçu pour focaliser le faisceau laser (3) élargi au niveau d'une position focale (P2) à l'intérieur de la zone cible (5),
un dispositif de déplacement (19) conçu pour déplacer le miroir elliptique ou hyperbolique (17) conjointement avec le miroir parabolique (16) afin de modifier la position focale (P2) à l'intérieur de la zone cible (5),
**caractérisé en ce que**
le miroir parabolique (16) et le miroir elliptique ou hyperbolique (17) sont placés à une distance fixe l'un de l'autre, et
le dispositif de déplacement (19) est conçu pour déplacer le miroir elliptique ou hyperbolique (17) conjointement avec le miroir parabolique (16) dans au moins une direction spatiale (X), de manière préférée dans deux ou trois directions spatiales (X, Y, Z).

2. Dispositif de focalisation selon la revendication 1, dans lequel le miroir parabolique (16) et le miroir elliptique ou hyperbolique (17) sont fixés sur un support commun (20).

3. Dispositif de focalisation selon la revendication 2, dans lequel le dispositif de déplacement (19) est conçu pour déplacer le support (20) dans au moins une direction spatiale (X), de manière préférée dans deux ou trois directions spatiales (X, Y, Z).

4. Dispositif de génération de rayonnement UVE (1), comprenant :
une chambre à vide (10) au sein de laquelle un matériau cible (6) peut être introduit dans une zone cible (5) afin de générer un rayonnement UVE (7),
une source de faisceau (2) conçue pour générer un faisceau laser (3),
un dispositif de focalisation (15) selon l'une quelconque des revendications précédentes conçu pour focaliser le faisceau laser (3) dans la zone cible (5) afin de générer un rayonnement UVE (7), ainsi que
un dispositif de guidage de faisceau (4) permettant de guider le faisceau laser (3) vers le dispositif de focalisation (15).

5. Dispositif de génération de rayonnement UVE selon la revendication 4, dans lequel le dispositif de guidage de faisceau (4) est conçu pour guider le faisceau laser (3), en particulier collimaté, vers le miroir parabolique (16) parallèlement à un axe de symétrie (18) du miroir parabolique (16).
